Europäisches Patentamt

European Patent Office

Office européen des brevets

(19)

(11) Veröffentlichungsnummer: **0 146 902**
**B1**

(12) # EUROPÄISCHE PATENTSCHRIFT

(45) Veröffentlichungstag der Patentschrift:
**01.06.88**

(51) Int. Cl.⁴: **G 01 G 11/00,** G 01 G 9/00,
G 01 F 1/80

(21) Anmeldenummer: **84115560.9**

(22) Anmeldetag: **15.12.84**

(54) **Messvorrichtung zur kontinuierlichen Gewichtserfassung von Materialströmen.**

(30) Priorität: **21.12.83 DE 3346145**

(43) Veröffentlichungstag der Anmeldung:
**03.07.85 Patentblatt 85/27**

(45) Bekanntmachung des Hinweises auf die Patenterteilung:
**01.06.88 Patentblatt 88/22**

(84) Benannte Vertragsstaaten:
**AT BE CH DE FR GB IT LI LU NL SE**

(56) Entgegenhaltungen:
**DE - A - 1 940 425**
**DE - A - 2 544 976**
**DE - B - 1 044 433**
**FR - A - 2 491 210**
**GB - A - 801 304**
**US - A - 2 771 773**
**US - A - 2 832 218**
**US - A - 3 331 244**

(73) Patentinhaber: **Friedrich, Claus, Holzmühle,**
**D-6304 Lollar (DE)**

(72) Erfinder: **Friedrich, Claus, Holzmühle, D-6304 Lollar (DE)**

(74) Vertreter: **Sternagel, Hans-Günther, Dr. et al,**
**Patentanwälte Dr. Michael Hann Dr. H.-G. Sternagel**
**Sander Aue 30, D-5060 Bergisch Gladbach 2 (DE)**

## Beschreibung

Die Erfindung betrifft eine Messvorrichtung zur kontinuierlichen Gewichtserfassung von Materialströmen, insbesondere von Schüttgütern wie z.B. Körnerfrüchte oder deren Mahlprodukte gemäss dem Oberbegriff des Patentanspruches 1.

Zur genauen Gewichtserfassung von Materialströmen, wie sie bei vielen Schüttgütern gefordert wird, ist es üblich nacheinander ein Wiegegefäss zu füllen, zu wiegen und anschliessend wieder zu entleeren. Diese Methode hat den Nachteil, dass der kontinuierliche Materialstrom fortwährend unterbrochen wird und ausserdem mechanisch aufwendig ist.

Zur kontinuierlichen Gewichtserfassung von Materialströmen werden in der Praxis nur Förderbandwaagen eingesetzt, hierbei wird das Gewicht eines mit Schüttgut beaufschlagten Förderbandes kontinuierlich gemessen. Diese Methode ist in vielen Prozessen nicht anwendbar, da sie zum einen recht aufwendig ist und zum anderen nur sehr schwierig staubdicht auszuführen ist.

Eine bekannte Methode zur kontinuierlichen Mengenmessung von schüttfähigen Feststoffen besteht darin, dass Fördergut aus einer bestimmten Fallhöhe auf eine Prallplatte fallen zu lassen und die Stosskraft an der Prallplatte zu messen. Unter der Voraussetzung, dass gleichbleibende Bedingungen eingehalten werden können, ist die Stosskraft proportional zur Förderstärke. Es ist nicht möglich, die Messbedingungen wie Fallhöhe, Reibung zwischen Schüttgut und Prallplatte so gleichbleibend zu halten, dass eine ausreichende Genauigkeit erzielt wird. Insbesondere im unteren Messbereich treten durch Luftverwirbelungen Messfehler auf, welche diese Methode für höhere Anforderunge an die Messgenauigkeit, wie sie bei einer Gewichtsermittlung gefordert werden, unbrauchbar machen.

Zur Massen- bzw. Mengenbestimmung von pneumatisch gefördertem Schüttgut der Eisenindustrie, wie Kalkstaub oder Feinerz wird gemäss der DE-A-25 44 976 die wirksame Trägheitskraft (Corioliskraft), welche bei der Kopplung eines bewegten Masseteilchens mit einem sich drehenden Bezugskörper auftritt, zur Massenbestimmung ausgenutzt. Hierbei wird der Materialstrom achsparallel auf praktisch die gesamte Fläche einer mit radialen Leitschaufeln versehenen Scheibe gebracht, worauf das Schüttgut im wesentlichen senkrecht zur Rotationsachse der Scheibe weggeschleudert wird. Das Drehmoment der mit konstanter Drehzahl rotierenden Scheibe ändert sich entsprechend der Corioliskraft, wobei die Drehmomentänderung zu der Masse des strömenden Messgutes etwa proportional ist. Mit der Änderung des Drehmomentes ändert sich die Leistungsaufnahme des die Scheibe antreibenden Elektromotors; deshalb kann die Stromaufnahme des Elektromotors gemessen werden und als Mass zur Bestimmung des Massenstromes benutzt werden. Für die Anwendung in der Eisenindustrie zur Bestimmung der Gattierungsmengen mag die in der DE-A-25 44 976 beschriebene

Vorrichtung ausreichend sein, aber zur exakten Durchflussbestimmung eines reinen Schüttgutstromes wie z.B. Körnerfrüchte ist diese Vorrichtung zu ungenau. Die Zuführung des Schüttgutes senkrecht auf praktisch die gesamte Leitschaufelfläche der rotierenden Scheibe führt zu unkontrollierten Abpralleffekten beim Berühren der Leitschaufeln, wodurch die Messgenauigkeit negativ beeinflusst wird. Je nachdem, an welcher Stelle des Scheibenradius die Masseteilchen auftreffen, ist die Beschleunigungsstrecke durch die Leitschaufeln verschieden lang; dadurch gehen auch unterschiedliche Reibungseinflüsse zwischen den Masseteilchen und den Leitschaufeln in das Messergebnis ein. Zudem ist die Leistungsaufnahme-Messung des Elektromotors relativ ungenau, wegen des unlinearen Wirkungsgradverlaufes und sich ändernder Lagerreibung.

In FR-A-2 491 210 ist eine Vorrichtung zur Durchflussmengenmessung beschrieben, bei der das Messgut auf einen Sektor einer rotierend angetriebenen Fläche aufgegeben und durch die Fliehkraft nach aussen weitergefördert wird. Die asymetrische Aufgabe des Gutes und der teilweise direkte Austrag des Gutes führt auch wegen der asymetrischen Aufhängung der rotierenden Teile zwangsläufig zu nicht tolerierbaren Messungenauigkeiten.

Der Erfindung liegt die Aufgabe zugrunde, eine Messvorrichtung, welche die bei der Beschleunigung des Materials auftretende Drehmomentsänderung misst, so zu gestalten, dass eine kontinuierliche Gewichtserfassung mit grosser Genauigkeit erzielt wird. Dabei kommt es wesentlich darauf an, dass die einzelnen Masseteilchen möglichst gleichen Beschleunigungsbedingungen unterliegen und alle das Antriebsdrehmoment beeinflussenden Nebenwirkungen ausgeschaltet werden.

Diese Aufgabe wird gelöst durch eine Messvorrichtung zur kontinuierlichen Gewichtserfassung von Materialströmen, insbesondere von Schüttgütern wie Körnerfrüchte oder deren Mahlprodukte, bestehend aus einem mit konstanter Drehzahl von einem Motor angetriebenen Flügelrad mit kegelförmiger Oberfläche und mit sich vom Aussenumfang zum Mittelpunkt hin erstreckenden Leitschaufeln, bei dem der Materialstrom über eine Beschickungseinrichtung zugeführt und durch die Leitschaufeln der Materialstrom beschleunigt wird, und das Flügelradgehäuse gegenüber dem Ausschleuderbereich des Flügelrades als Prallbereich ausgebildet ist, wobei die auftretende Änderung des Antriebsdrehmomentes als Messgrösse zur Ermittlung der Durchsatzmenge dient, das dadurch gekennzeichnet ist, dass

a) die Beschickungseinrichtung aus einem bis in einen axialen Zuführbereich geführten Zuführtrichter besteht, der so ausgebildet ist, dass der Materialstrom in den axialen Bereich des Flügelrades gelangt,

b) als kegelförmige Oberfläche der axiale Zuführbereich des Flügelrades mit einer den Materialstrom radial in Richtung der Leitschaufeln umlenkenden kegelförmigen Leitvorrichtung versehen ist,

c) die Leitschaufeln vor dem axialen Zuführbereich des Flügelrades enden,

d) der Prallbereich des Flügelradgehäuses schräg zur Flügelradachse verlaufend ausgebildet ist,

e) der Motor zum Antrieb des Flügelrades vertikal gelagert ist.

In den abhängigen Ansprüchen 2–8 sind bevorzugte Ausführungsformen beschrieben.

Die erfindungsgemässe Ausbildung des Flügelrades in Kombination mit den weiteren Merkmalen gewährleistet, dass der Materialstrom ohne störende Pralleffekte dem mittleren Bereich des Flügelrades und anschliessend radial den Leitschaufeln zugeführt wird. Zwischen den Leitschaufeln unterliegt jedes Masseteilchen den selben Beschleunigungsbedingungen, so dass die Masse des Gesamtstromes durch die Änderung des Antriebdrehmomentes sehr genau erfasst wird. Die Beschleunigungsstrecke ist für jedes Masseteilchen gleich lang. Dies wird dadurch erreicht, dass der zentrale Zuführbereich des Flügelrades mit einer den Materialstrom radial in Richtung der Leitschaufeln umlenkenden Leitvorrichtung versehen ist, die kegelförmig ausgebildet ist, wobei die Spitze des Kegels dem Materialstrom entgegengerichtet ist.

Von der Leitvorrichtung gelangt der Materialstrom in einen Prallbereich am Flügelradgehäuse, das gegenüber dem Ausschleuderbereich des Flügelrades als schräg zur Flügelradachse verlaufender Prallbereich ausgebildet ist.

Dieser Prallbereich verläuft vorzugsweise unter einem Winkel von 45° zur Flügelradachse. Die Beschickungseinrichtung besteht aus einem bis in den zentralen Zuführbereich geführten Zuführtrichter, welchem vorzugsweise eine Schleuse vorgeordnet ist.

Als Schleuse dient vorzugsweise eine Zellenradschleuse oder eine Rohrschnecke. Wenn keine Schleuse vorhanden ist, könnte der miteingezogene Luftstrom zu einer Verfälschung des Messergebnisses führen. In diesem Falle ist es vorteilhaft, wenn eine vom Auslaufraum des Flügelradgehäuses zum Zufuhrbereich des Materialstromes führende Luftrückleitung vorhanden ist.

Der Motor zum Antrieb des Flügelrades ist vorzugsweise pendelnd gelagert und mit einer Drehmomentmessvorrichtung verbunden.

Als Drehmomentmesseinrichtung dient eine in Achsrichtung des Motors zum Antrieb des Flügelrades verlaufender Kraftaufnehmer, welcher über ein Gestänge mit dem Motorgehäuse verbunden ist. Dem Kraftaufnehmer sind ein auf den Mengenstrom pro Zeiteinheit geeichtes Anzeigegerät üblicher Bauart sowie ein üblicher bekannter Gesamtmengenzähler zugeordnet.

Um die Abhängigkeit zwischen dem Massestrom und dem erforderlichen Drehmoment zum Antrieb des Flügelrades aufzuzeigen, wird nachstehend folgender rechnerischer Nachweis geführt:

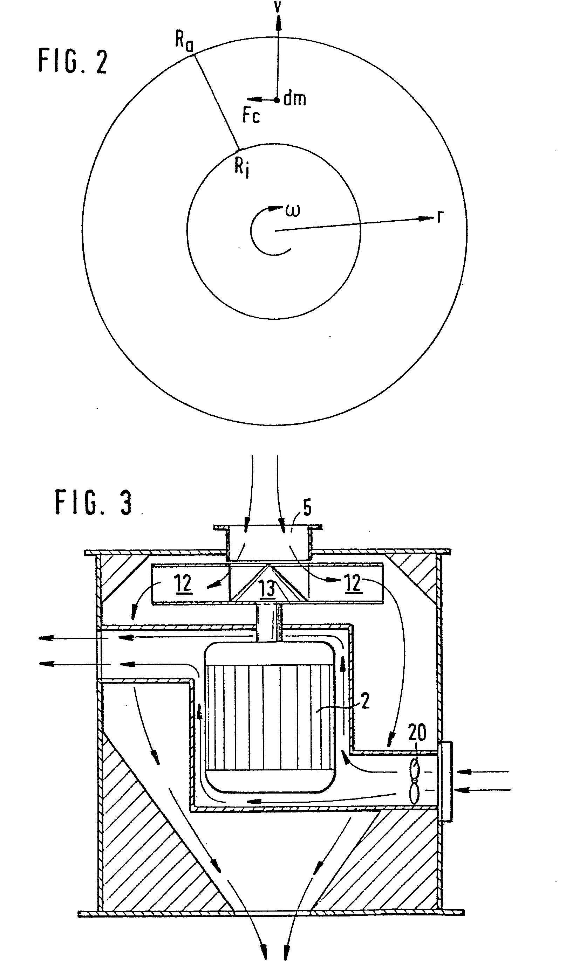

In einem bewegten (rotierenden) Bezugssystem (siehe Fig. 2) wirkt auf ein Masseteilchen $dm$ die Corioliskraft $F_c$. Diese Kraft $F_c$ wirkt senkrecht zur Winkelgeschwindigkeit $\omega$ und senkrecht zur Teilchengeschwindigkeit $v$. Die Corioliskraft ist für jeden Radius gleich und für das betrachtete Massenelement $dm$

$$d\,F_c = 2\,\omega \cdot v \cdot dm$$

Das Massenelement $dm$ lässt sich berechnen aus der Definition, dass die Masse $m = \rho \cdot V$ ist, mit $\rho$ = Dichte und $V$ = Volumen zu:

$$dm = \rho \cdot dV$$

wobei das Volumenelement $dV$ gegeben ist aus der Querschnittsfläche $A$ im Abstand $r$ vom Drehpunkt zu:

$$dV = A \cdot dr$$

und damit

$$dm\, A \cdot \rho \cdot dr$$

In die Gleichung für die Corioliskraft eingesetzt erhält man dann für diese:

$$d\,F_c = 2\,\omega \cdot v \cdot A \cdot \rho \cdot dr$$

Das Produkt $A \cdot \rho \cdot v$ ist gleich dem Massenstrom pro Zeit durch das betrachtete Volumenelement, also

$$\frac{dm}{dt} = A \cdot \rho \cdot v = \dot{m}$$

Damit ergibt sich eine Beziehung zwischen dem Massendurchsatz $\dot m$ und Corioliskraft $F_c$, die auf Grund ihrer Natur der Drehung des Flügelrades entgegengerichtet ist, also ein bremsendes Drehmoment erzeugt.

$$d\,F_c = 2\,\omega \cdot \dot{m} \cdot dr$$

Daraus folgt für das Drehmoment $\tau_c = \vec{F_c} \times \vec{r}$ bzw. da hier $\vec{F_c} \perp \vec{r}$ gilt:

$$d\,\tau_c = r\,d\,F_c = 2\,\omega \cdot \dot{m} \cdot r\,dr$$

Das Bremsdrehmoment $\tau_c$ erhält man durch Integration über die Schaufellänge zu:

$$\tau_c = 2\,\omega \cdot \dot{m} \int_{R_i}^{R_a} r\,dr$$

$$\Rightarrow \tau_c = \dot{m} \cdot \omega\,(R_a{}^2 - R_i{}^2)$$

Hieraus ergibt sich, dass das zum konstanten Antrieb des Flügelrades erforderliche Drehmoment genau proportional zum Massendurchsatz ist. Dieses Ergebnis wurde auch durch praktische Versuche bestätigt.

Im praktischen Aufbau der Messvorrichtung kommt es darauf an, den Materialstrom möglichst gleichmässig und wirbelfrei dem Flügelrad zuzuführen und auch aus diesem wieder ohne Rückwirkung abzuführen.

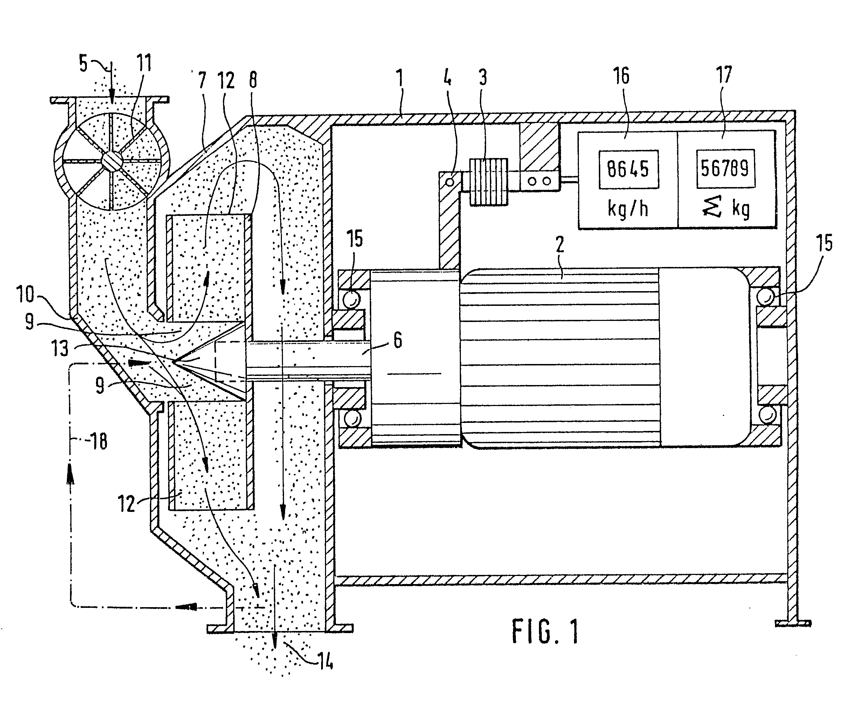

Nähere Einzelheiten sind an einer in der Zeichnung Fig. 1 gezeigten Ausführungsform, die aufgrund der horizontalen Lagerung des Motors nicht mehr unter den Anspruch 1 fällt, erläutert. Ein in dem Gehäuse 1 pendelnd gelagerter Elektromotor 2 treibt über die Welle 6 das in dem Flügelradgehäuse 7 angeordnete Flügelrad 8 an. Der Elektromotor ist so gesteuert, dass er unabhängig von der Belastung das Flügelrad 8 mit konstanter Drehzahl antreibt. Im axialen Zufuhrbereich 9 des Flügelrades 8 schliesst sich an das Flügelradgehäuse 7 ein Zuführtrichter 10 an, welchem eine Zellenradschleuse 11 vorgeschaltet ist. Die Leitschaufeln 12 des Flügelrades 8 befinden sich ausserhalb des zentralen, axialen Zufuhrbereiches 9, so dass der Materialstrom möglichst störungsfrei zwischen die Leitschaufeln 12 gelangt. Die radiale Umlenkung wird durch die Leitvorrichtung 13 in Form eines Kegels 13 begünstigt.

Die Wirkungsweise der Messvorrichtung ist folgende:

Der durch einen Pfeil 5 angedeutete Materialstrom z.B. Körnerfrüchte wie Weizen, wird über die Zellenradschleuse 11 gleichmässig dem Zufuhrtrichter 10 zugeleitet und gelangt in den axialen Bereich 9 des sich mit konstanter Drehzahl drehenden Flügelrades. Eine Drehzahl, welche eine Umfangsgeschwindigkeit von ca. 10 m/sec am Aussendurchmesser des Flügelrades ergibt, hat sich als zweckmässig bei Körnerfrüchten erwiesen. Die auf diese Weise möglichst störungsfrei radial zwischen die Leitschaufeln 12 transportierten Masseteilchen werden durch das Flügelrad unter gleichen Bedingungen für jedes Masseteilchen radial nach aussen geschleudert. Das Flügelradgehäuse 7 hat im Bereich der Ausschleuderstelle eine unter etwa 45° zur Flügelradachse geneigte Gehäusewand, so dass die ausgeschleuderten Partikel in den hinteren Abfuhrkanal abgelenkt und durch den Auslauf 14 abgeführt werden. Auf diese Weise wird das Flügelrad durch abprallende Partikel nur unbedeutend beeinflusst.

Das vom Motor 2 aufzubringende Antriebsdrehmoment ist abhängig von der Masse des jeweils durch das Flügelrad 8 zu fördernden Materialstromes. Weil der Motor 2 über das Gestänge 4, unter Zwischenschaltung des parallel zur Drehachse angeordneten Kraftaufnehmers 3 pendelnd aufgehängt und lediglich bei 15 drehbar geführt ist, wird die durch das Reaktionsdrehmoment auftretende Verdrehung des Motorgehäuses auf den Kraftaufnehmer 3 übertragen. Die aufgenommene Kraft wird durch das Anzeigegerät 16 direkt in kg/h als augenblickliche Durchsatzleistung angezeigt. Diese Durchsatzleistung wird mit Hilfe eines Integrators akkumuliert und auf das Zählwerk 17 zur Ablesung übertragen.

Die Zellenradschleuse 11 verhindert, dass ein unkontrollierter Luftstrom durch das Flügelrad beschleunigt wird und das Messergebnis beeinflusst. Auch eine Rohrschnecke könnte dieselbe Aufgabe erfüllen.

Eine Kompensation des mitgeführten Luftstromes kann auch durch eine vom Auslaufraum 14 bis zum Zufuhrbereich führende Luftrückleitung 18 erfolgen. Durch diese Verbindungsleitung wird ständig die maximale Luftmenge, die das Flügelrad aufnimmt, gefördert und dadurch immer die gleiche Luftmenge beschleunigt. Das Messergebnis wird durch die Luft somit nicht verfälscht.

Die Messvorrichtung wird in einer anderen, als der gezeigten horizontalen Lage installiert, nämlich vertikal. Voraussetzung ist, dass die zentrale Zuführung zum Flügelrad gewährleistet ist und der Auslauf des Materials aus dem Flügelradgehäuse ungehindert erfolgen kann.

Fig. 3 zeigt die Anordnung bei der der Antriebsmotor 2 vertikal gelagert ist und durch einen vom Ventilator 20 erzeugten Luftstrom gekühlt wird. Der Schüttgutstrom 5 wird am Kegel 13 umgelenkt auf die Leitschaufeln 12 des Flügelrades.

Die Messvorrichtung kann auch als Dosierwaage eingesetzt werden; hierzu wird dem Flügelrad ein Dosierelement, wie beispielsweise die Zellenradschleuse 11, vorgeschaltet. Durch eine Regeleinrichtung wird die Drehzahl des Dosierelementes so eingestellt, dass das Drehmoment des Flügelrades einem gewünschten Sollwert entspricht. Dieses Solldrehmoment ist proportional dem gewünschten Materialstrom.

**Patentansprüche:**

1. Messvorrichtung zur kontinuierlichen Gewichtserfassung von Materialströmen, insbesondere von Schüttgütern wie Körnerfrüchte oder deren Mahlprodukte, bestehend aus einem mit konstante Drehzahl von einem Motor (2) angetriebenen Flügelrad (8) mit kegelförmiger Oberfläche und mit sich vom Aussenumfang zum Mittelpunkt hin erstreckenden Leitschaufeln (12), bei dem der Materialstrom über eine Beschikkungseinrichtung (10, 11) zugeführt und durch die Leitschaufeln (12) der Materialstrom beschleunigt wird, und das Flügelradgehäuse (7) gegenüber dem Ausschleuderbereich des Flügelrades (8) als Prallbereich ausgebildet ist, wobei die auftretende Änderung des Antriebsdrehmomentes als Messgrösse zur Ermittlung der Durchsatzmenge dient, dadurch gekennzeichnet, dass

a) die Beschickungseinrichtung aus einem bis in einen axialen Zuführbereich (9) geführten Zuführtrichter (10) besteht, der so ausgebildet ist, dass der Materialstrom in den axialen Bereich des Flügelrades (8) gelangt,

b) als kegelförmige Oberfläche der axiale Zuführbereich (9) des Flügelrades (8) mit einer den Materialstrom radial in Richtung der Leitschaufeln (12) umlenkenden kegelförmigen Leitvorrichtung (13) versehen ist,

c) die Leitschaufeln (12) vor dem axialen Zuführbereich (9) des Flügelrades (8) enden,

d) der Prallbereich des Flügelradgehäuses (7) schräg zur Flügelradachse verlaufend ausgebildet ist,

e) der Motor (2) zum Antrieb des Flügelrades (8) vertikal gelagert ist.

2. Messvorrichtung nach Anspruch 1, dadurch gekennzeichnet, dass die Beschickungseinrichtung noch eine dem Zufuhrtrichter (10) vorgeordnete Schleuse (11) aufweist.

3. Messvorrichtung nach Anspruch 2, dadurch gekennzeichnet, dass als Schleuse eine Zellenradschleuse (11) oder eine Rohrschnecke dient.

4. Messvorrichtung nach einem der Ansprüche 1 bis 3, gekennzeichnet durch eine vom Auslaufraum (14) des Flügelradgehäuses (7) zum Zufuhrbereich des Materialstromes führende Luftrückleitung (18).

5. Messvorrichtung nach einem der Ansprüche 1 bis 4, dadurch gekennzeichnet, dass der Prallbereich (7) etwa unter einem Winkel von 45° zur Flügelradachse (6) verläuft.

6. Messvorrichtung nach einem der Ansprüche 1 bis 5, dadurch gekennzeichnet, dass der Motor (2) zum Antrieb des Flügelrades (8) pendelnd gelagert und mit der Drehmomentmessvorrichtung verbunden ist.

7. Messvorrichtung nach Anspruch 6, dadurch gekennzeichnet, dass als Drehmomentmesseinrichtung eine in Achsrichtung des Motors (2) zum Antrieb des Flügelrades (8) verlaufender Kraftaufnehmer dient, welcher über ein Gestänge mit dem Motorgehäuse verbunden ist.

8. Messvorrichtung nach Anspruch 7, dadurch gekennzeichnet, dass dem Kraftaufnehmer (3) ein auf den Mengenstrom pro Zeiteinheit geeichtes Anzeigegerät (16) sowie ein Gesamtmengenzähler (17) zugeordnet ist.

9. Verwendung der Messvorrichtung nach Ansprüchen 2 oder 3 als Dosiervorrichtung, dadurch gekennzeichnet, dass die Schleuse (11) als Dosierelement dient, indem die Förderleistung der Schleuse (11) so eingeregelt wird, dass das der gewünschten Menge entsprechende Drehmoment des Flügelrades (8) von der Drehmomentmessrichtung angezeigt wird.

**Revendications**

1. Dispositif de mesure permettant de déterminer de manière continue le poids de courants de matériaux, notamment de matières en vrac comme des grains de céréales et de légumes secs ou leurs produits concassés, consistant en un rotor (8) entraîné à une vitesse constante de rotation par un moteur (2) et comportant une surface de forme conique et des ailettes directrices (12) s'étendant de la périphérie extérieure jusqu'au centre, dans lequel le courant de matériau est amené par un dispositif de chargement (10, 11) et ce courant de matériau est accéléré par les ailettes directrices (12), tandis que, en regard de la zone d'éjection du rotor (8), le carter de rotor (7) est agencé sous la forme d'une zone de déviation par choc, la variation du couple de rotation d'entraînement qui se produit servant de grandeur de mesure pour la détermination du débit, ce dispositif étant caractérisé en ce que:

a) le dispositif de chargement est constitué par une goulotte d'amenée (10) qui aboutit à une zone d'amenée axiale (9) et qui est agencée d'une façon telle que le courant de matériau parvienne dans la zone axiale du rotor (8),

b) pour constituer la surface de forme conique, la zone d'amenée axiale (9) du rotor (8) est pourvue d'un dispositif de guidage de forme conique (13) qui dévie radialement le courant de matériau en direction des ailettes directrices (12),

c) les ailettes directrices (12) se terminent avant la zone d'amenée axiale du rotor (8),

d) la zone de déviation par choc, du carter de rotor (7) est réalisée de façon à s'étendre obliquement par rapport à l'axe du rotor,

e) le moteur (2) destiné à entraîner le rotor (8) est monté en position verticale.

2. Dispositif de mesure suivant la revendication 1, caractérisé en ce que le dispositif de chargement comporte encore un sas (11) disposé en amont de la goulotte d'amenée (10).

3. Dispositif de mesure suivant la revendication 2, caractérisé en ce que c'est un sas à roue cellulaire (11) ou un cylindre à vis sans fin qui sert de sas.

4. Dispositif de mesure suivant l'une des revendications 1 à 3, caractérisé par une conduite de recyclage d'air (18) conduisant de la chambre de sortie (14) du carter de rotor (7) à la zone d'amenée du courant de matériau.

5. Dispositif de mesure suivant l'une des revendications 1 à 4, caractérisé en ce que la zone de déviation par choc (7) s'étend sensiblement sous un angle de 45° par rapport à l'axe (6) du rotor.

6. Dispositif de mesure suivant l'une des revendications 1 à 5, caractérisé en ce que le moteur (2) destiné à entraîner le rotor (8) est monté flottant et qu'il est relié à un dispositif de mesure du couple de rotation.

7. Dispositif de mesure suivant la revendication 6, caractérisé en ce qu'il est prévu, comme dispositif de mesure du couple de rotation, un transducteur de force qui s'étend suivant la direction axiale du moteur (2) destiné à entraîner le rotor (8) et qui est relié au carter du moteur par une tringlerie.

8. Dispositif de mesure suivant la revendication 7, caractérisé en ce qu'il est associé au transducteur de force (3) un appareil d'affichage (16) étalonné en flux de quantité par unité de temps, ainsi qu'un compteur de quantité cumulée (17).

9. Utilisation du dispositif de mesure suivant les revendications 2 ou 3 en tant que dispositif de dosage, caractérisée en ce que le sas (11) sert d'élément de dosage, la capacité de transfert du sas (11) étant réglée d'une façon telle que le couple de rotation du rotor (8) qui correspond à la quantité voulue se trouve affiché par le dispositif de mesure de couple de rotation.

**Claims**

1. Measuring device for continuous weight determination of material streams, particularly of loose materials such as granular crops or their grinding products, consisting of an impeller wheel (8) being driven at a constant rotational speed by a motor (2) and having a conical surface and guide vanes (12) extending from the outer perimeter towards the center, wherein the stream of material is supplied along a supply means (10, 11) and is accelerated by guide vanes (12) and the impeller housing (7) opposite the centrifugal range of the impeller wheel (8) is constructed as a bouncing section wherein the resulting driving torque variations serve as a measure for the determination of the throughput weight, characterized in that,

a) the supply means consists of a supply funnel (10) extending into an axial supply range (9) constructed in such a way that the stream of material reaches the axial range of the impeller wheel (8);

b) the axial supply range (9) of the impeller wheel (8) is provided with a conical guiding device (13) as a conically shaped surface, for conducting the stream of material radially towards the guide vanes (12);

c) the guide vanes (12) termiante short of the axial supply range (9) of the impeller wheel (8);

d) the bouncing section of the impeller wheel housing (7) lies at an angle to the impeller wheel axis;

e) the motor (2) driving the impeller wheel (8) is vertically mounted.

2. The measuring device of claim 1, characterized in that, the supply means further comprise a charging valve (11) in front of the supply funnel (10).

3. The measuring device of claim 1, characterized in that, a bucket wheel lock (11) or a worm tube serves as the charging valve.

4. The measuring device of any of the claims 1 to 3, characterized by, an air feed-back line (18) extending from the discharge space (14) of the impeller wheel housing (7) to the supply range of the stream of material.

5. The measuring device of any of the claims 1 to 4, characterized in that, the bouncing section lies at an angle of about 45° to the impeller wheel axis (6).

6. The measuring device of any of the claims 1 to 5, characterized in that, the motor (2) driving the impeller wheel (8) is arranged to oscillate and is connected to the torque measuring device.

7. The measuring device of claim 1, characterized in that, an energy absorption element positioned axially to the motor (2) for driving the impeller wheel (8) serves as the torque measuring device and is attached by a bracket to the motor housing.

8. The measuring device of claim 1, characterized in that, the energey absorption element (3) is connected to an indicating instrument (16) calibrated in mass per units of time, as well as a counter for the total mass (17).

9. Use of the measuring device of claims 2 or 3 as a dosing device, characterized in that, the charging valve (11) serves as the dosing element, in that the throughput of the charging valve (11) is adjusted so that the torque of the impeller wheel (8) corresponds to the desired amount, and is indicated by the torque measuring device.

0 146 902

**0645** kg/h   **56789** $\Sigma$ kg

FIG. 1

FIG. 2

FIG. 3